# EUROPEAN PATENT APPLICATION

(11) **EP 2 108 991 A1**
(43) Date of publication of application: **14.10.2009**
(21) Application number: 08103423.3
(22) Date of filing: 08.04.2008
(51) Int. Cl.: G02B 21/00

(54) **Scanning Microscope**

(71) Applicant: PerkinElmer Cellular Technologies Germany GmbH, 22525 Hamburg (DE)
(72) Inventor: Müller, Jürgen Dr., 22523, Hamburg (DE)
(74) Representative: von Kirschbaum, Alexander

(57) **Abstract**

A scan microscope comprises a sample holder device (10), a microscope head (12) and a moving means. The microscope head comprises an objective (14), a radiation supply device (16) and a radiation receiving device (22). With the aid of a moving means, the whole microscope head (12) is moved in at least one horizontal direction, preferably a horizontal plane.

## Description

The present invention relates to a scanning microscope which is suited particularly for use in high-throughput screening. Preferably, said microscope is a confocal microscope and/or a laser/scan microscope provided with a laser device for illumination of the sample under testing.

Scan microscopes are provided with a sample holder device for accommodating the sample under testing. The sample holder device will take up e.g. an areal sample to be scanned for examination. Further, the sample holder device, which is particularly configured as a sample table, can be suited for positionally accurate holding of a multi-well plate, particularly a microtiter plate. Further, the microscope includes an objective for focusing radiation, such as e.g. laser radiation, in the sample. In the beam path, there is normally arranged a tilting mirror for deflecting the beam. In use, the tilting mirror will be controlled to cause the scanning beam to scan the sample in a linewise fashion. The radiation emitted by the sample e.g. by scattering or fluorescence, is transmitted - if desired, via a beam splitter - through the objective to a detector such as e.g. a photodiode or a CCD camera. The influence of the tilting mirror and the resultant deflecting of the radiation will cause distortion and other negative optical influences particularly in the edge region of the sample, which are mainly due to imperfections of the objective's optical properties, such as vignetting, axial and lateral aberrations, and chromatic aberrations. Such effects will impair the results of the examination. A further disadvantage of scan microscopes wherein, for scanning of the sample, an illumination beam is deflected particularly by a tilting mirror, resides in that the viewing field of the objective is limited. The viewing field will depend on the selected magnification. In known scan microscopes, if one wishes e.g. to examine a larger sample or a larger part of a sample and thus to use a larger viewing field, one will have to exchange the objectives. In cases where, for instance, a specific resolution and, at the same time, an enlarged viewing field are desired, it is necessary to image multiple fields sequentially and then combine them into a larger image, resulting in extended time for image acquisition and combination, as well as in imperfections of the combined image due to optical distortions of the individual field images.

It is an object of the present invention to provide a scan microscope by which good measurement results can be obtained also in the edge region of the viewing field and which enables acquisition of images at high resolution and magnification over extended viewing fields.

According to the present invention, the above object is achieved by the features indicated in claim 1.

The scan microscope of the present invention includes, apart from a sample holder device for accommodating the sample under examination, a microscope head. The microscope head carries an objective for observation of a sample accommodated by the sample holder device. The microscope head further carries a radiation supply device and a radiation receiving device. The radiation supply device is used for supplying the radiation, particularly laser radiation, for illuminating the sample through the objective. Via the radiation receiving device, the radiation emitted by the sample which is generated particularly by reflection or fluorescence, will be received and, if required, transmitted toward a detection device. According to the invention, the microscope head including at least an objective, a radiation supply device and a radiation receiving device which are connected to each other particularly in a rigid manner, is coupled to a moving means. With the aid of the moving means, the whole microscope head is moved at least in a horizontal direction, particularly in a horizontal plane, i.e. for instance in the X- and Y-directions. The scanning of the sample is thus performed along a scanning line by moving the microscope head. According to a preferred embodiment, the displacement of the microscope head relative to the sample prior to the scanning of the next scan line can also be performed by moving the microscope head.

Particularly for focusing the radiation in the sample, also the movement in the vertical or normal direction relative to the sample can optionally be performed by moving the microscope head. If desired, said movement in the vertical direction as well as a movement in the horizontal direction for displacement from one scan line to the next can be performed by movement of the sample holder device in addition to a corresponding movement of the microscope head.

By the inventive provision of a microscope head which at least forms a unit including the objective, the radiation supply device and the radiation receiving device, it is rendered possible to produce an extremely compact and economical apparatus. Since, at least along the scanning line, the movement of the microscope head is carried out with the aid of the moving means, no optical deflection of the radiation, e.g. by means of a tilting mirror, will be required. Consequently, the quality of the measurement data, particularly in the edge region, is improved. Particularly, this can be accomplished in that the moving means is caused to perform exclusively a movement of the microscope head in a plane extending parallel to the plane of the sample. Since the object plane that is imaged in this way is directly defined by the movement of the microscope head, any curvature of the imaged object plane can also be avoided. This is in contrast to conventional microscopic imaging, where imperfections of the objective's optical design can cause a curved object plane to be in focus, unless complex and expensive optical designs are used.

Microscope objectives known in the art exhibit an approximately inverse relationship between the magnification and optical resolution on the one hand, and the accessible field of view in the sample on the other hand; hence, only limited magnifications can be used if one desires to image a large field of view in the sample. Since, according to the present invenetion, the deflection of the beam is not limited anymore by the field of view of the objective used but, instead, the size of the region which can be scanned is limited by the maximum possible displacement range of the moving means, larger samples can be examined than previously possible. For enlarging the viewing field, i.e, a sample region to be examined, an exchange of objectives for an objective of lower magnification will thus not be required anymore. The disadvantage of a reduction of the resolution caused by a corresponding enlargement of the viewing field is eliminated.

The radiation supply device fixedly connected to the microscope head can be a radiation generation device such as e.g. an illumination source, a laser diode or the like. In the present embodiment of the invention, the radiation generation device will be moved together with the microscope head when scanning the sample. Further, it is possible to provide a radiation generation device which is not moved together with the microscope head, i.e. particularly a stationary radiation generation device. To allow for such an arrangement, the radiation supply device includes a radiation incoupling device which will be moved together with the microscope head. The radiation incoupling device is connected to the radiation generation device via a radiation conduit such as e.g. an optical fiber. The optical fiber is preferably a single-mode fiber, but a multi-mode fiber can be used with incoherent light sources.

The radiation receiving device can optionally be directly designed as a detector arrangement which may include a plurality of detectors. In the present embodiment, the detector arrangement is connected to the microscope head or a part of the microscope head and is moved together therewith for scanning the sample. Further, a detector arrangement can be arranged externally relative to the microscope head; this detector arrangement can be stationary, if required. The connection to the detection device is realized by a radiation decoupling device fixedly connected to the microscope head and by an optical fiber arranged between the radiation decoupling device and the detection device.

The detection device which particularly can also include a plurality of detectors, will preferably include photodiodes and/or multi-segment detectors, particularly multi-segment photodiodes. The different segments of the detector can be configured to detect different geometrical and/or spectral components of the radiation emitted from the sample. For detection of different geometrical components of the radiation, the detector can include two or more laterally adjacent segments, particularly concentric regions. In this case, particularly the inner region can be used for confocal measurement and the inner and outer regions can be used for less confocal or wide-field-mode measurements.

Radiation can be directed towards the individual detector segments by optical fibers, particularly a fbundle of fibers, or by one or multiple beam splitters. For detection of different spectral components of the radiation, particularly dichroic beam splitters can be assigned to the individual detector segments. Further, different filters - preferably bandpass filters for selection of defined ranges of wavelengths to be detected - can be provided for the individual segments. Filters can be combined with means for geometrical separation as discussed above. In particular, the use of optical fibers to guide detected radiation to the detector segments enables said segments to be placed at suitable distances from each other, and hence enables the placement of individual bandpass filters in from of said segments. Thereby, it is rendered possible to measure a confocal image by use of one wavelength and a non-confocal image by use of another wavelength. Further, it is possible to use line detectors. Such detectors can be configured to image a line of geometrically adjacent point in the sample concurrently, or can be combined with a means for spectral dispersion, e.g. a prism or an optical grating, to image a range of spectral components of the radiation emitted by a single point in the sample. The above described special embodiments of useful detector arrangements are particularly connected immediately to the microscope head and thus are connected rigidly to the objective of the microscope head.

Additionally, the microscope head can include further optical elements to be moved together with the whole microscope head. Such elements can be e.g. optical diaphragms, focusing lenses, beam splitters and the like.

Since, according to a preferred embodiment, particularly the fast movements are carried out by the microscope head, undesired movement of the sample is avoided. Particularly in case of liquid samples provided in the wells of a microtiter plate, undesired movement of the samples would cause a significant corruption of the measurement results.

Preferred embodiments of the invention will be explained in greater detail hereunder with reference to the accompanying drawings.
- Figs. 1-6: are schematic plan views of different embodiments of scan microscope according to the invention,
- Fig. 7: is a schematic sectional view of a preferred embodiment of a bundle of optical fibers, and
- Fig. 8: is a schematic plan view of a multi-zone detector.

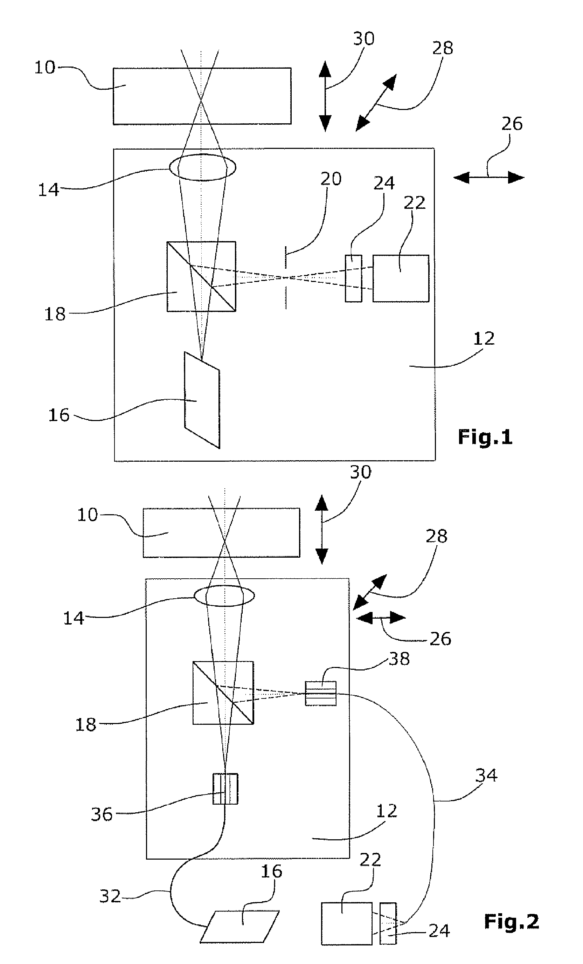

A first embodiment (Fig. 1) of the scan microscope includes a sample holder device 10. The sample holder device 10 can be configured e.g. as a sample table adapted to have arranged therein a sample carrier such as e.g. a microtiter plate. In the illustrated embodiment, the samples arranged in the individual wells of the microtiter plate are examined from below through the bottom of the microtiter plate. For this purpose, a microscope head 12 is provided, schematically outlined in the schematic Figure by a rectangular surface. All of the components arranged within the rectangular surface are parts of the microscope head and thus are arranged at fixed distances relative to each other. Microscope head 12 includes an objective 14 schematically depicted as a lens. Microscope head 12 further includes a radiation generation device 16 such as e.g. a laser device. The radiation emitted by laser 16 is transmitted via beam splitter 18 to the objective 14 and by the latter is focused in the well of the microtiter plate. The radiation emitted by the sample, e.g. by reflection or fluorescence, passes through the microscope into the beam splitter 18 and is deflected by the beam splitter in the right-hand direction according to Fig. 1 toward a pinhole 20. The radiation emitted by the sample is then detected by a detector 22 which in the illustrated embodiment also forms a part of the microscope head. Upstream of detector 22, a filter 24 can be arranged.

With the aid of a moving means which particularly include a piezo stack connected to the microscope head and a linear guide, the whole microscope head 12 can be moved in a horizontal direction indicated by arrow 26. This direction is the scanning direction. The scanning of the next parallel line is performed by displacing the sample holder device 10 and respectively the sample carrier supported by the sample holder device 10 in the direction of arrow 28. Arrow 28 indicates a displacement direction oriented vertically to the plane of the Figure. In the illustrated embodiment, for focusing or for displacing the microscope head relative to the sample holder device vertically in the Z direction, the sample holder device 10 and the sample, respectively, will be displaced in the direction of arrow 30. For displacing the sample holder device in the direction of arrows 28,30, a further moving means is provided, preferably including a stepper motor or other electric motor, transmission means and a linear guide. Further, it is possible to provide a connection to the moving means of the microscope head.

In all of the embodiments described hereunder (Figs. 2-6), similar components will be identified by the same reference numerals throughout. The individual embodiments can of course be combined with each other.

The embodiment shown in Fig. 2 is different from the embodiment according to Fig. 1 in that the radiation generation device 16 as well as the detector arrangement 22 do not form integral components of microscope head 1. Instead, the two devices 16,22 are connected via radiation conduits 32,34 to a radiation incoupling device 36 and a radiation decoupling device 38. The two coupling devices 36,38 are parts of microscope head 12 and hence ensure that radiation is emitted and received, respectively, at positions and angles which are fixed relative to beam splitter 18 and objective 14.

No pinhole 20 is provided here since the radiation will be coupled into the radiation decoupling device 38, with the incoupling side acting in the manner of a pinhole.

The moving directions for moving the sample holder device 10 as well as the microscope head 12 can be provided in the same manner as in the embodiment shown in Fig. 1. Further, it is possible, using the moving means connected to microscope head 12, to perform a movement of the microscope head in the horizontal plane, i.e. in the X- und Y-directions corresponding to arrows 26,28. In the embodiment shown, the movement in the vertical direction is effected by moving the sample holder device.

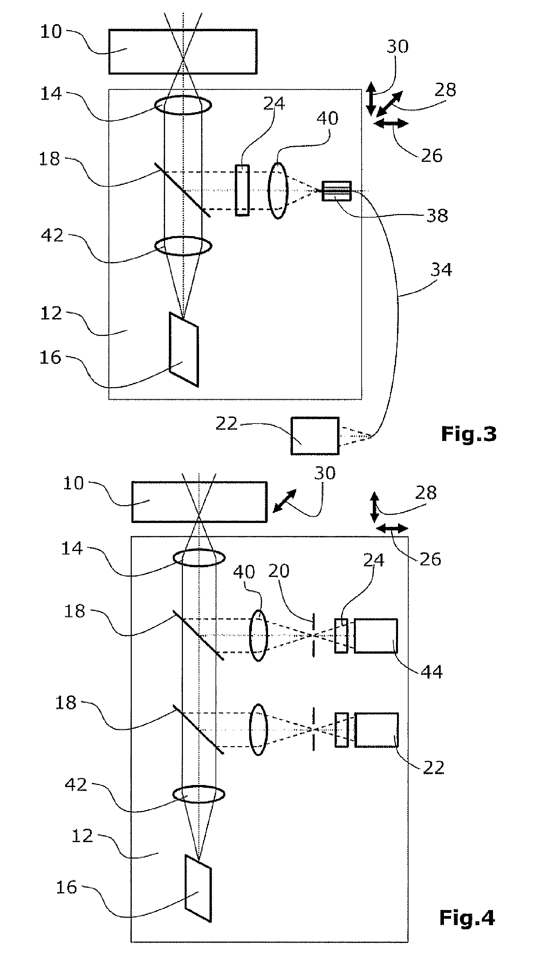

According to a further embodiment (Fig. 3), the radiation generation device 16, such as e.g. a laser, is a fixed component of microscope head 12. The detector 22 is arranged externally of the microscope head as has been the case in the above embodiment according to Fig. 2. Further, along with microscope head 12, a collimation lens 40 is arranged between the filter 24 and the radiation decoupling device 38. Further, a collimation lens 42 is arranged between the beam splitter 18 and the laser 16. All components are rigidly attached to the microscope head. In the embodiment illustrated in Fig. 3, all movements are carried out with the aid of the moving means connected to the microscope head. It is also possible to perform the movements in the manner provided in the embodiments according to Figs. 1 or 2.

In a still further embodiment (Fig. 4), a plurality of detectors 22,44 are provided. This allows for simultaneous detection of a plurality of wavelengths and/or a plurality of polarizations. Upstream of each detector 22,44 of the detector arrangement, a filter 24, a pinhole 20 and a collimation lens 40 are arranged. Further, two beam splitters 18 are provided for decoupling the corresponding wavelengths or polarizations in the direction of the detectors 22 and 44, respectively. The beam splitters may be chosen to selectively reflect certain spectral and/or polarization components of the radiation towards the detectors, and/or the filters 24 may be designed to selectively pass such components of the radiation.

In the illustrated embodiment, the movement of the microscope head 12 is performed in a horizontal scanning direction 26 and in a vertical direction 28 which particularly serves for focusing. The sample holder device 10 is moved in the direction of arrow 30 into the second horizontal direction.

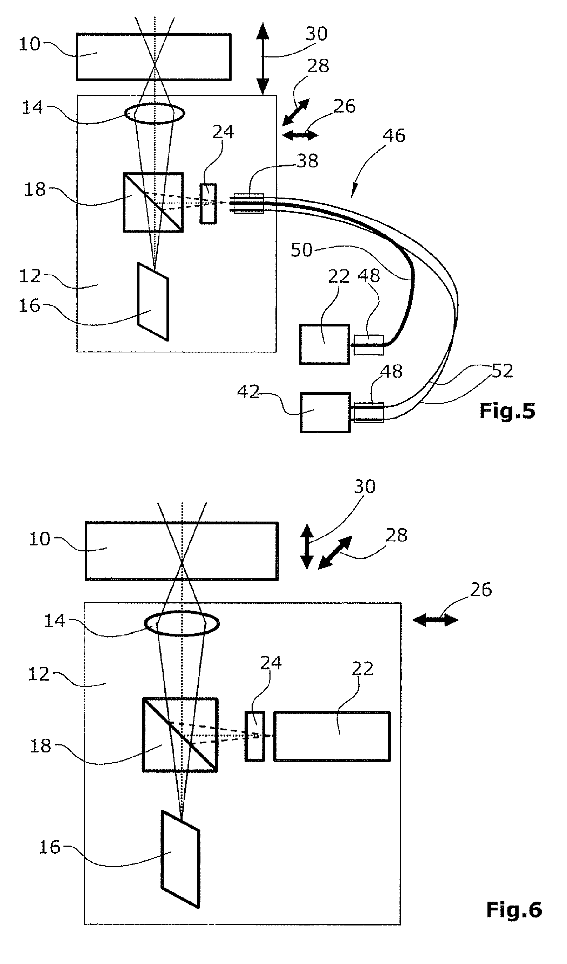

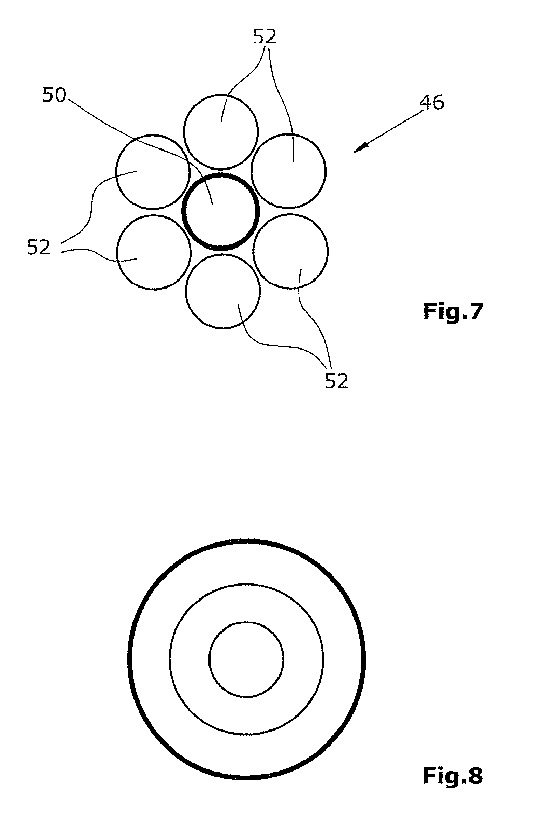

By use of an optical fiber bundle 46 according to the embodiment shown in Fig. 5, it is possible to simultaneously perform a detection of a confocal image at a first detector 22 and of an image with reduced confocality at a second detector 44. Assigned to each detector 22,44 are fastening elements 48 for receiving the ends of the optical fibers. A corresponding fastening element is a component of the microscope head 12, as part of the radiation decoupling device 38. Preferably, a centrally arranged fiber 50 is connected to the first detector 22 serving for confocal measurement. The other fibers 52 are connected to the second detector 42. Fig. 7 shows a preferred arrangement of the fibers in the optical fiber bundle 46 in a cross-section. The optical fiber bundle depicted in Fig. 7 can, however, be used as well in the other embodiments shown in the Figures.

A similar effect can be obtained by configuring the detector as a multi-element detector 22 (Fig. 6). This detector includes a plurality of zones as illustrated in Fig. 8 by way of example. The innermost zone is suitable for acquiring a confocal image, while signals from the outer zones can be used - individually or in combination - to acquire images at reduced degrees of confocality, but with increased detection efficiency and hence shorter exposure time and/or an improved signal-to-noise ratio.

## Claims

1. A scan microscope comprising a sample holder device (10),
a microscope head (12) comprising
an objective (14) for observation of a sample arranged in the sample holder device (10),
a radiation supply device (16,32,36) provided to supply radiation to the sample through the objective (14), and
a radiation receiving device (22,24,34,38) provided to receive radiation coming from the sample through the objective (14), and
a moving means for moving the microscope head (12) in at least one horizontal direction.

2. The scan microscope according to claim 1, **characterized in that** the objective (14), the radiation supply device (16) and the radiation receiving device (22) are rigidly connected to each other and are arranged to be moved together by the moving means.

3. The scan microscope according to claim 1 or 2, **characterized in that** the moving means is arranged to move the microscope head (12) in a horizontal plane and/ or that the sample holder device (10) is arranged to move the sample in at least one axis in a horizontal plane.

4. The scan microscope according to any one of claim 1-3, **characterized in that** the microscope head (12) is movable by the moving means in a vertical direction.

5. The scan microscope according to any one of claims 1-4, **characterized in that** the microscope head (12) comprises a beam splitter (18), particularly a beam splitter rigidly connected to the objective (14).

6. The scan microscope according to any one of claims 1-5, **characterized in that** the radiation supply device comprises a radiation generation device (16), particularly a radiation generation device (16) rigidly connected to the objective.

7. The scan microscope according to any one of claims 1-5, **characterized in that** the radiation supply device comprises a radiation incoupling device (36) for radiation incoupling via a flexible radiation conduit (32) connected to the radiation generation device (16).

8. The scan microscope according to any one of claims 1-7, **characterized in that** the radiation receiving device comprises a detector device (22), particularly a detector device (22) rigidly connected to the objective (14).

9. The scan microscope according to any one of claims 1-7, **characterized in that** the radiation receiving device comprises a radiation decoupling device (38) for radiation decoupling via a flexible radiation conduit (34) connected to the detector device (22).

10. The scan microscope according to claim 8 or 9, **characterized in that** the detector device comprises a plurality of detectors (22,42), particularly photodiodes and/or segmentable detectors, particularly segmentable photodiodes.

11. The scan microscope according to claim 10, **characterized in that** each detector and each detector segment, respectively, has a beam splitter (18) assigned thereto, particularly a dichroic beam splitter (18).
